# DEMANDE DE BREVET EUROPEEN

(11) **EP 1 231 666 A1**
(43) Date de publication de la demande: **14.08.2002**
(21) Numéro de dépôt: 02290217.5
(22) Date de dépôt: 30.01.2002
(51) Int. Cl.: H01M 8/06, C01B 3/36

(54) **Procédé et dispositif de production d'électricité dans une pile à combustible par oxydation d'hydrocarbures suivie d'une filtration des particules**

(30) Priorité: 08.02.2001 FR 0101714
(71) Demandeur: INSTITUT FRANCAIS DU PETROLE, 92852 Rueil-Malmaison Cedex (FR)
(72) Inventeur: Lenglet, Eric, 92500 Rueil Malmaison (FR); Boucot, Pierre, 69360 Ternay (FR); Martin, Gérard Henri, 69230 Saint Genis Laval (FR)

(57) **Abrégé**

Procédé de production d'électricité dans lequel on fait réagir un courant 1 d'hydrocarbures et un courant 2 d'air, dans une chambre 3 d'oxydation partielle, les conditions opératoires étant :
- temps de résidence dans la chambre compris entre 100 et 1200 millisecondes
- température de sortie de la chambre comprise entre 1150 et 1650°C
- pression de la chambre comprise entre 0,1 et 1,5 MPa. La quantité de suies contenue dans l'effluent est inférieure à 0,1 %poids par rapport à la charge. On refroidit l'effluent de la chambre et on le fait circuler dans une zone de captation de suies comportant un premier circuit 6 comprenant au moins un premier filtre 7 et un deuxième circuit 41 qui sont montés en parallèle, on effectue pendant une période de temps, une étape de filtration des suies de l'effluent dans le premier filtre qui a un rapport surface de filtration sur volume utile compris entre 80 et 5000 m⁻1. Pendant une autre période de temps on régénère le premier filtre en présence d'oxygène, et on fait circuler l'effluent refroidi dans le second circuit. On récupère un effluent sortant de la zone de captation riche en hydrogène et on alimente une pile 10 à combustible en cet effluent.

## Description

L'invention concerne un procédé et un dispositif de production d'électricité à partir d'hydrocarbures, et utilisant une pile à combustible.
Les applications peuvent concerner des systèmes stationnaires ou embarqués de production d'électricité ou de cogénération électricité / chaleur.

L'arrière plan technologique est illustré par le brevet US-A-5.897.970 et les demandes de brevet WO 99/46032, WO 00/78443 et JP 06 111844 (Patent abstracts of Japan, vol. 018, n° 382 (E-1580) 19 juillet 1994).

On connaît déjà des systèmes de production d'électricité à partir de charges d'hydrocarbures, comprenant une pile à combustible et un "processeur de carburant" permettant de transformer le carburant (la charge d'hydrocarbures) en un mélange de gaz H2/CO/CO2/H2O, ou gaz de synthèse, permettant, éventuellement après traitement, d'alimenter une pile à combustible.
Différents types de processeurs de carburant sont connus, notamment des systèmes utilisant le vaporéformage des hydrocarbures pour leur transformation en gaz riche en H2/CO/CO2/H2O. On connaît également l'oxydation partielle ou POX (pour "Partial Oxydation"). Cette technique utilise un brûleur fonctionnant avec une quantité d'oxydant (air ou oxygène) inférieure à la stoechiométrie de combustion. De l'eau est souvent ajoutée à l'oxydant et/ou à la charge d'hydrocarbures pour améliorer la production d'hydrogène, et réduire ou éliminer la formation de suies. Cette production de suies est le principal problème de l'oxydation partielle, en particulier avec les charges d'hydrocarbures liquides, qui contiennent souvent des composés aromatiques et oléfiniques qui sont des précurseurs de suies.
On connaît également le procédé autothermique (ou ATR) qui comprend une oxydation partielle, et un réformage catalytique des effluents gazeux chauds de l'oxydation partielle.
Là aussi, la formation de suies est un problème très important, les suies désactivant le catalyseur si elles sont en quantité trop importante.
L'élimination des suies contenues dans un gaz de synthèse issu d'une unité d'oxydation partielle est un problème industriel connu : on opère par lavage du gaz et captation des suies par de l'eau.
On a également déjà proposé d'utiliser un filtre à suies pour des unités industrielles. Par exemple, dans la demande de brevet des Etats-Unis n° US 1999-271741, on expose le problème d'éliminer les suies correspondant à "1 à 3 %" du carbone de la charge sous forme de "suies non réagies", par combustion alternée dans deux filtres à bougie. Les charges mentionnées sont le charbon, la liqueur noire et les combustibles d'hydrocarbures.

Les filtres à bougies sont des appareils peu compacts, plus adaptés à des unités industrielles qu'à la fourniture de petites quantités de gaz riche en hydrogène, par exemple pour l'alimentation de piles à combustible.
On connaît par ailleurs des filtres à suies très compacts, utilisés pour la filtration d'effluents de moteurs diesel.
Ces filtres sont clairement incompatibles avec des quantités de suies telles que celles mentionnées précédemment.

Le premier objet de l'invention est un procédé et un dispositif permettant de produire de l'électricité dans une pile à combustible alimentée par un gaz ayant été obtenu par oxydation partielle, et ceci sans problème de suies.

Le deuxième objet de l'invention est un procédé et un dispositif simplifié et économique d'élimination des suies.

A cet effet, l'invention décrit un procédé de production d'électricité dans une pile à combustible, à partir d'hydrocarbures comprenant une étape d'oxygénation partielle des hydrocarbures, caractérisé en ce que
a) l'on alimente un courant 1 contenant une charge d'hydrocarbures de points d'ébullition inférieurs à environ 400°C
b) on préchauffe le courant à une température d'au moins 200°C, et suffisante pour que ledit courant soit entièrement vaporisé,
c) on alimente un courant 2 d'oxydant gazeux contenant de l'air, et l'on préchauffe le courant d'oxydant à une température d'au moins 400°C
d) on fait réagir les deux courants gazeux dans une zone 3 ou chambre d'oxydation partielle, les conditions opératoires de cette chambre étant dans la gamme suivante :
   - temps de résidence dans la chambre compris entre 100 et 1200 millisecondes
   - température de sortie de la chambre comprise entre 1150 et 1650°C
   - pression de la chambre comprise entre 0,1 et 1,5 MPa, et de préférence 0,15 MPa à 0,8 MPa
   la température de sortie de la chambre étant suffisante pour que 90% au moins du carbone de la charge soit converti en CO ou CO2, et que la quantité de suies contenue dans l'effluent soit inférieure à 0,1 %poids par rapport à la charge, de préférence comprise entre 0,5 ppm et 100 ppm (1 ppm = 1 partie par million)
e) on refroidit l'effluent de la chambre à une température comprise entre 200°C et 1050°C et de préférence entre 500°C et 900°C
f) on fait circuler l'effluent refroidi dans au moins une zone de captation et de traitement de suies comportant un premier circuit 6 comprenant au moins un premier filtre 7 et un deuxième circuit 41 qui sont montés en parallèle, on effectue une étape de filtration de l'effluent dans le premier filtre pendant une période de temps de façon à y déposer des suies, on régénère le premier filtre contenant les suies en présence d'un gaz contenant de l'oxygène pendant une autre période de temps et pendant ladite autre période de temps on fait circuler l'effluent refroidi dans le second circuit, ledit premier filtre ayant une compacité élevée telle que le rapport surface de filtration sur volume utile soit comprise entre 80 et 5000 m⁻¹, et on récupère un effluent sortant de la zone de captation, riche en hydrogène
g) on alimente une pile 10 à combustible par une partie au moins de l'effluent sortant de la zone de captation.

La chambre d'oxydation équipée d'au moins un brûleur peut être une chambre agitée ou à écoulement piston ou à écoulement mixte.
Les filtres à particules sont généralement compacts. On choisira en règle générale des filtres de préférence en matière céramique, dont le rapport surface de filtration sur volume du filtre est le plus élevé possible, sachant que la contre pression générée par le filtre dans ces conditions est plus faible.
On peut obtenir d'excellents résultats de filtration avec un rapport surface de filtration sur volume du filtre compris en général entre 80 m⁻¹ et 5000 m⁻¹ et de préférence entre 150 et 1500 m⁻¹, minimisant de ce fait la fréquence de régénération. Les filtres généralement recommandés peuvent être ceux utilisés pour retenir les particules des moteurs diesels dans l'industrie automobile, qui ont une efficacité supérieure à 70%, de préférence supérieure à 90% et plus particulièrement entre 93 et 98%, comme c'est le cas pour les filtres multitubulaires à structure en nid d'abeille. On peut avantageusement utiliser des monolithes en matière céramique, en cordiérite ou carbone de silicium, à efficacité supérieure à 90% ou des filtres à fibres céramiques, enroulées autour de cylindres percés de trous, à efficacité supérieure à 75% mais à plus faible contre pression.
On peut aussi utiliser des filtres à fibres tricotées en céramique ou en verre, ou à métaux frittés compatibles avec la température des effluents circulant dans le filtre, supérieure à la température de combustion des suies.

Selon une caractéristique de l'invention, le deuxième circuit de la zone de captation peut renfermer au moins un filtre. Il peut contenir un catalyseur de réformage à la vapeur des suies captées pour les gazéifier pendant que le premier filtre est en période de régénération.

Selon une variante , on peut régénérer le filtre du deuxième circuit en présence d'un gaz contenant de l'oxygène pendant une partie au moins de la période de temps de l'étape de filtration dans le premier filtre.

Les effluents provenant de la régénération du premier filtre par combustion des suies peuvent être mélangés avec l'effiuent circulant dans le deuxième circuit et introduits dans la pile à combustible. Selon une variante, ces effluents de régénération peuvent être soutirés du premier filtre.

Selon une autre caractéristique de l'invention, le courant d'oxydant gazeux et/ou la charge d'hydrocarbures peuvent contenir de la vapeur d'eau dans un rapport massique H₂O/hydrocarbures compris entre 0.1 et 2.0, de préférence compris entre 0,4 et 1,2.

Les piles à combustibles peuvent être une pile de type à électrolyte à oxyde solide (SOFC), peu sensible aux impuretés, une pile à électrolytes polymères (type PEMFC) ou une pile à acide phosphorique, ces deux dernières étant particulièrement sensibles à la teneur en mono oxyde de carbone et en hydrogène sulfuré qu'il est préférable de minimiser.
Il s'avère donc avantageux d'effectuer au moins une étape d'élimination au moins partielle de l'hydrogène sulfuré et du mono oxyde de carbone de l'effluent provenant de la zone de captation.

Selon une autre caractéristique de l'invention, il peut être avantageux de modifier les conditions de fonctionnement de la zone d'oxydation partielle pendant les périodes de régénération du premier filtre pour réduire la quantité de suies produite pendant lesdites périodes et circulant dans le deuxième circuit.

L'invention concerne aussi un dispositif de production d'électricité comprenant en combinaison :
- un circuit 1 d'alimentation d'un courant d'oxydant riche en air relié à au moins un échangeur de chaleur 5 pour le réchauffage dudit courant,
- au moins une chambre d'oxydation partielle relié à l'échangeur de chaleur 5 et à un courant d'alimentation 2 d'un courant riche en hydrocarbures, pour l'oxydation partielle des hydrocarbures par le courant d'oxydant réchauffé, à une température suffisante pour l'obtention d'une conversion des hydrocarbures supérieure à 90 %, et la formation de suies en quantité inférieure à 0,1 %poids par rapport aux hydrocarbures
- la chambre d'oxydation partielle 3 étant reliée en aval à l'échangeur de
- des moyens de captation et de traitement des suies ayant une entrée reliée à l'échangeur de chaleur 5 et comportant un premier circuit 6 comprenant au moins un premier filtre 7, et un deuxième circuit 41 montés en parallèle, le premier filtre comportant en outre des moyens de régénération 20, 21, séquentielle par combustion des suies, le premier filtre ayant un rapport surface de filtration sur volume utile compris entre 80 et 5000 m⁻¹ et de préférence entre 150 et 1500 m⁻¹, les moyens de captation et de traitement ayant une sortie 9 d'effluents débarrassés de suies et riches en hydrogène,
- au moins une pile à combustible connectée à la sortie des effluents des moyens de captation et de traitement, adaptée à produire de l'électricité,
- des moyens de mise en oeuvre en alternance des moyens de captation et de traitement des suies 30, 31, 32, 35, connectés aux moyens de régénération du premier filtre 20, 21.

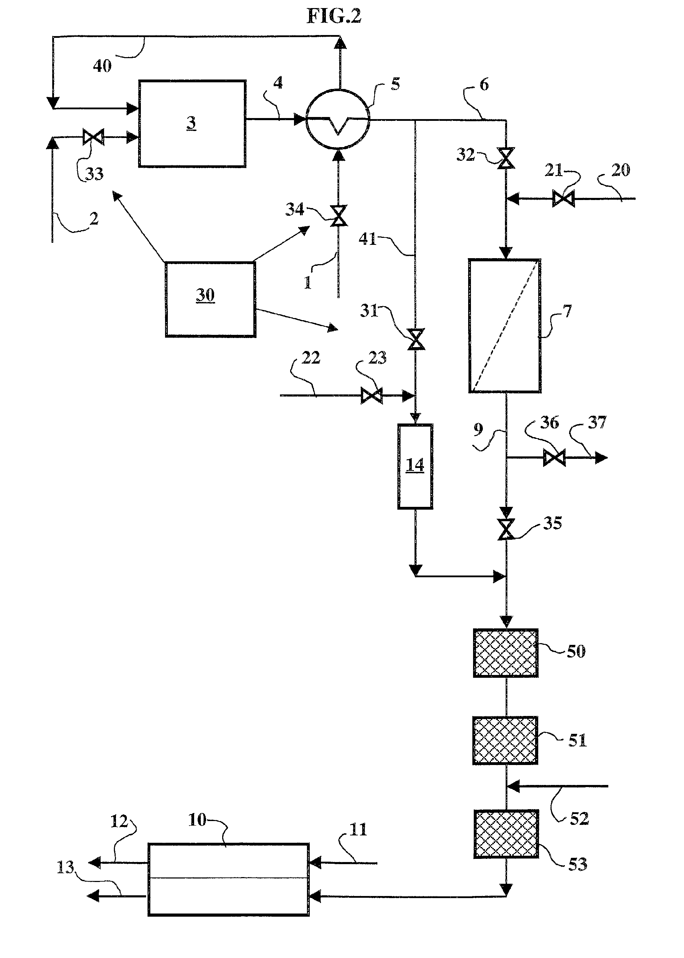

L'invention sera mieux décrite par les figures suivantes qui illustrent deux modes de mise en oeuvre du dispositif, parmi lesquelles :

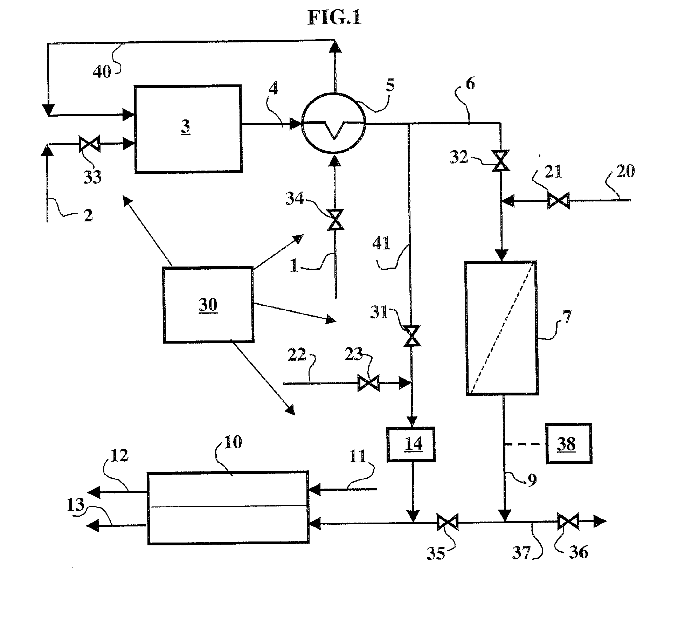

- la figure 1 représente une installation de production d'électricité avec une chambre d'oxydation partielle d'hydrocarbures, un échangeur de chaleur, un filtre à suies et une pile à combustible.
- Le figure 2 illustre un dispositif où la pile à combustible des organes de purification.

Un conduit 1 d'alimentation d'un mélange d'air et de vapeur d'eau, comprenant une vanne de réglage 34 est relié à un échangeur de chaleur 5 pour son réchauffage à haute température. En sortie de l'échangeur 5, ce courant d'oxydant chaud alimente par le conduit 40 une chambre 3 d'oxydation partielle, ou POX. La chambre comporte une première zone qui est une zone de mélange suivie d'une seconde zone qui est une zone à écoulement piston.
Cette chambre est également alimentée par un courant contenant une charge d'hydrocarbures, par exemple un mélange de vapeur et d'hydrocarbures entièrement vaporisés, par un conduit 2 comprenant une vanne de réglage 33.
Les effluents d'oxydation partielle comprenant CO, CO₂, H₂, H₂O et des suies transportées circulent dans le conduit 4 et sont refroidis dans l'échangeur de chaleur 5 dans lequel ils transfèrent de la chaleur au courant d'oxydant.

En sortie de l'échangeur 5, les gaz refroidis circulent dans un conduit 6 (premier circuit) comprenant une vanne de sectionnement 32 et alimentent un filtre principal à suies, compact 7 en matière céramique. Ce filtre peut contenir sur une partie au moins de sa surface filtrante un catalyseur de vaporéformage. En aval du filtre, les gaz filtrés circulent dans un conduit 9 et alimentent une pile à combustible 10 de type à électrolyte à oxyde solide (SOFC).
Après consommation de la plus grande partie de l'hydrogène et du monoxyde de carbone alimentant cette pile, un courant résiduel est évacué en sortie de la pile par un conduit 13.
Un courant d'air alimente la pile par un conduit 11, et ressort de la pile 10, appauvri en oxygène, et chargé de vapeur d'eau par un conduit 12.
Un conduit 20, comprenant une vanne de sectionnement 21 permet d'alimenter séquentiellement un courant d'air ou d'oxydant (air dilué) vers le filtre 7 afin de le régénérer par combustion des suies déposées dans ce filtre.
L'installation comprend également un conduit 41 de contournement du filtre 7 (deuxième circuit) par les gaz issus de l'oxydation partielle, pendant les phases de régénération de ce filtre 7. Ce conduit 41 comprend une vanne de sectionnement 31 et alimente un filtre auxiliaire 14, de capacité généralement plus faible que celle du filtre 7. Ce filtre auxiliaire peut avoir les mêmes caractéristiques que celles du filtre 7 ou bien il peut avoir des caractéristiques conventionnelles dans la mesure où une faible quantité d'effluent circule dans le circuit 41 et il peut alors être remplacé. Ce filtre peut en particulier contenir un catalyseur de vaporéformage au nickel permettant de gazéifier de petites quantités de suies pendant les périodes ou phases de régénération du filtre principal. Le conduit 9 de sortie du filtre sur lequel est disposée une vanne 35 comprend un conduit 37 d'évacuation des effluents de régénération contrôlé par une vanne 36. Il est par ailleurs relié à des moyens de mesure 38 de la teneur en oxygène du gaz sortant du filtre, permettant de savoir si la régénération du filtre et la combustion des suies sont terminées.
L'installation comprend également des moyens de contrôle 30 tels qu'un automate programmable ou un ordinateur permettant de gérer les différentes phases de fonctionnement de l'installation : démarrage, arrêt, phases de régénération des suies, fonctionnement normal. Ces moyens 30 sont reliés aux organes permettant de contrôler le procédé et ses variables opératoires 33, 34, 31, 32, 21, 38, par des liaisons non représentées.

La figure 2 représente une variante d'installation selon le procédé de l'invention.
Cette installation reprend, avec les mêmes numérotations, la plupart des différents éléments de la figure 1.

Une première différence concerne l'évacuation des effluents de la régénération du filtre.
Le conduit 9 de sortie du filtre comprend une vanne de sectionnement 35 et est relié en amont de cette vanne à un conduit 37 d'évacuation des effluents de régénération, comprenant une vanne de sectionnement 36.
La ligne 41 comporte en outre en amont du filtre auxiliaire un apport de vapeur d'eau par un conduit 22 contrôlé par une vanne 23.
L'installation de la figure 2 comprend par ailleurs, en aval du conduit 9 différentes zones d'épuration des gaz épurés sortant du filtre à suies.
Une zone 50 est une zone d'élimination d'H2S sur un lit granulaire d'adsorbant, par exemple contenant de l'oxyde de zinc. Elle peut comprendre aussi une zone de réformage catalytique d'hydrocarbures résiduels. Une zone 51, qui peut comporter deux parties, est une zone de transformation catalytique du CO en hydrogène par la réaction équilibrée CO + H2O → CO2 + H2. Cette opération est bien connue industriellement ("shift conversion" ou "water gas shift"). Une zone 53 est une zone d'élimination finale du CO jusqu'à une teneur résiduelle de quelques ppm volume par rapport au gaz traité, par exemple 10 ppm.
Cette opération d'oxydation préférentielle (ou PROX) est rendue possible par l'introduction par le conduit 52 d'une quantité d'air adaptée à la quantité de CO à éliminer. L'installation de la figure 2 comprend également des moyens thermiques non représentés tels que des échangeurs thermiques, permettant d'adapter les températures des différentes zones 50, 51, 53, et à l'entrée de la pile à combustible 10 aux valeurs requises. Typiquement, la pile à combustible de la figure 2 est une pile à électrolyte polymère (de type PEMFC) ou une pile à acide phosphorique.

La description du fonctionnement de l'installation de la figure 1 est illustrée par l'exemple.
On règle le fonctionnement stabilisé de la chambre d'oxydation partielle dans les conditions suivantes :
- Charge d'hydrocarbures : gazole, de point d'ébullition final 370 °C ;
- Pression de la chambre 0,25 MPa ;
- Température de sortie de la chambre 1460 °C ;
- Préchauffage des hydrocarbures 480 °C ;
- Vapeur d'eau ajoutée à l'air avec un rapport massique H2O / Hydrocarbures = 0,4 ;
- Temps de résidence dans la chambre : 800 millisecondes ;
- Préchauffage du mélange air-vapeur d'eau : 800 °C ;
- Rapport O2/C : adapté, en fonction de la nature du gazole, pour obtenir la température de sortie de la chambre ;
- Température de sortie des gaz de l'échangeur, et d'entrée du filtre à suies : 740 °C.

Le filtre à suies utilisé est du type multicanaux de surface microporeuse à base de carbure de silicium, de dimension caractéristique des canaux comprise entre 1 et 5 mm, de type similaire aux filtres utilisés à la sortie de moteurs diesels automobiles. Le rapport surface de filtration sur volume du filtre est de 800 m⁻¹ par exemple. Son efficacité est de 96%.
Lorsque l'on détecte une perte de charge élevée du filtre 7 indiquant un colmatage notable par les suies, le contrôleur de procédé 30 modifie les positions des vannes 33 et 34, réglant les conditions opératoires pour obtenir au moins l'une des deux actions suivantes :
- augmentation de la température de sortie (par exemple non limitatif de 50 à 150 °C),
- augmentation de la quantité de vapeur d'eau ajoutée (par exemple pour obtenir de façon non limitative un rapport massique H2O/Hydrocarbures compris entre 0,8 et 1,5).
A titre d'exemple, on peut augmenter la température (par augmentation de l'air alimenté) jusqu'à 1500 °C, avec un rapport massique H2O/hydrocarbures de 1,2.
Dans ces conditions de rendement énergétique diminué on produit des quantités de suies très faibles ou négligeables, (inférieures à 2 ppm, par exemple) et l'on peut transitoirement contourner le filtre et procéder à sa régénération sans risques de colmatage. Le filtre auxiliaire 14, contenant par exemple un lit de catalyseur de vaporéformage, n'est pas encrassé substantiellement,.
Si l'on gère ces conditions opératoires modifiées, pour sensiblement éliminer les suies, on peut supprimer le filtre 14.

Lorsque des conditions opératoires modifiées (moins bonnes sur le plan énergétique mais meilleures pour réduire les suies) sont obtenues, on ouvre la vanne 31 du circuit 41 de contournement du filtre, on ferme la vanne 32, et l'on ouvre la vanne 21 pour alimenter un mélange d'air dilué par de la vapeur d'eau afin de brûler les suies.
La fin de la combustion des suies est détectée par la sonde d'oxygène 38 et permet de reconfigurer le système en position filtration des gaz, par réouverture de la vanne 32 et fermeture des vannes 31 et 21.

La figure 2 fonctionne de façon voisine, avec une différence au niveau de l'évacuation des effluents du filtre au cours des phases de régénération : au cours de ces phases, la vanne 35 est fermée, la vanne 36 est ouverte, et les gaz de régénération sont évacués par le conduit 37.
On pourrait également utiliser ce dispositif dans l'installation de la figure 1. Il peut être utile, notamment si pour cette installation utilisant une pile à électrolyte oxyde solide (SOFC), l'on utilise également des traitements catalytiques des gaz en amont de la pile à combustible, tels que l'élimination du soufre dans une zone 50 d'adsorption par exemple sur oxyde de zinc, ou de shift conversion zone 51.
Ainsi, les effluents de régénération ne peuvent perturber ces zones catalytiques.

L'invention permet d'obtenir des quantités de suies très basses, inférieures à 1000 ppm poids, par rapport aux hydrocarbures alimentés, et souvent inférieures à 400 ppm, en particulier inférieures à 150 ppm, les valeurs préférées étant inférieures à 50 ppm. Elle permet également, de façon inattendue, d'utiliser des filtres et technologies de filtre à suies très compacts, développés pour l'industrie automobile, ce qui ne pouvait être soupçonné dans l'art antérieur, ces filtres étant utilisés pour l'élimination de traces de suies seulement.

## Revendications

1. Procédé de production d'électricité dans une pile à combustible, à partir d'hydrocarbures comprenant une étape d'oxygénation partielle des hydrocarbures, **caractérisé en ce que**
a) l'on alimente un courant (1) contenant une charge d'hydrocarbures de points d'ébullition inférieurs à environ 400°C
b) on préchauffe le courant à une température d'au moins 200°C, et suffisante pour que ledit courant soit entièrement vaporisé,
c) on alimente un courant (2) d'oxydant gazeux contenant de l'air, et l'on préchauffe le courant d'oxydant à une température d'au moins 400°C
d) on fait réagir les deux courants gazeux dans une zone (3) ou chambre d'oxydation partielle, les conditions opératoires de cette chambre étant dans la gamme suivante :
- temps de résidence dans la chambre compris entre 100 et 1200 millisecondes
- température de sortie de la chambre comprise entre 1150 et 1650°C
- pression de la chambre comprise entre 0,1 et 1,5 MPa, et de préférence 0,15 MPa à 0,8 MPa
la température de sortie de la chambre étant suffisante pour que 90% au moins du carbone de la charge soit converti en CO ou CO2, et que la quantité de suies contenue dans l'effluent soit inférieure à 0,1 %poids par rapport à la charge, de préférence comprise entre 0,5 ppm et 100 ppm (1 ppm = 1 partie par million)
e) on refroidit (5) l'effluent de la chambre à une température comprise entre 200°C et 1050°C et de préférence entre 500°C et 900°C
f) on fait circuler l'effluent refroidi dans au moins une zone de captation et de traitement de suies comportant un premier circuit (6) comprenant au moins un premier filtre (7) et un deuxième circuit (41) qui sont montés en parallèle, on effectue une étape de filtration de l'effluent dans le premier filtre pendant une période de temps de façon à y déposer des suies, on régénère le premier filtre contenant les suies en présence d'un gaz contenant de l'oxygène pendant une autre période de temps et pendant ladite autre période de temps on fait circuler l'effluent refroidi dans le second circuit, ledit premier filtre ayant une compacité élevée telle que le rapport surface de filtration sur volume utile soit comprise entre 80 et 5000 m-1, et on récupère un effluent sortant de la zone de captation, riche en hydrogène
g) on alimente une pile (10) à combustible par une partie au moins de l'effluent sortant de la zone de captation.

2. Procédé selon la revendication 1, dans lequel le deuxième circuit renferme au moins un filtre (14) des suies.

3. Procédé selon la revendication 2, dans lequel le filtre du deuxième circuit contient un catalyseur de réformage à la vapeur des suies captées pour les gazéifier pendant que le premier filtre est régénéré.

4. Procédé selon la revendication 2, dans lequel on régénère le filtre du deuxième circuit en présence d'un gaz contenant de l'oxygène pendant une partie au moins de la période de temps de l'étape de filtration dans le premier filtre.

5. Procédé selon l'une des revendications 1 à 4, dans lequel on soutire du premier circuit des effluents de régénération du premier filtre.

6. Procédé selon l'une des revendications 1 à 5, dans lequel le courant d'oxydant gazeux et/ou la charge d'hydrocarbures contient de la vapeur d'eau dans un rapport massique H2O/hydrocarbures compris entre 0.1 et 2.0, de préférence compris entre 0,4 et 1,2.

7. Procédé selon l'une des revendications 1 à 6, dans lequel on mesure la teneur en oxygène de l'effluent sortant de la zone de captation.

8. Procédé selon l'une des revendications 1 à 7, dans lequel on effectue au moins une étape d'élimination au moins partielle de l'hydrogène sulfuré et du mono oxyde de carbone de l'effluent provenant de la zone de captation.

9. Procédé selon l'une des revendications 1 à 7, dans lequel la pile à combustible est une pile de type à électrolyte à oxyde solide (SOFC).

10. Procédé selon l'une des revendications 1 à 8, dans lequel la pile à combustible est une pile à électrolyte polymère (type PEMFC) ou une pile à acide phosphorique.

11. Procédé selon l'une des revendications 1 à 10, dans lequel on modifie les conditions de fonctionnement de la zone d'oxydation partielle pendant les périodes de régénération du premier filtre pour réduire la quantité de suies produite pendant lesdites périodes et circulant dans le deuxième circuit.

12. Dispositif de production d'électricité selon l'une des revendications 1 à 11, comprenant en combinaison :
- un circuit (1) d'alimentation d'un courant d'oxydant riche en air relié à au moins un échangeur de chaleur (5) pour le réchauffage dudit courant,
- au moins une chambre d'oxydation partielle relié à l'échangeur de chaleur (5) et à un courant d'alimentation (2) d'un courant riche en hydrocarbures, pour l'oxydation partielle des hydrocarbures par le courant d'oxydant réchauffé, à une température suffisante pour l'obtention d'une conversion des hydrocarbures supérieure à 90 %, et la formation de suies en quantité inférieure à 0,1 %poids par rapport aux hydrocarbures
- la chambre d'oxydation partielle (3) étant reliée en aval à l'échangeur de
- des moyens de captation et de traitement des suies ayant une entrée reliée à l'échangeur de chaleur (5) et comportant un premier circuit (6) comprenant au moins un premier filtre (7), et un deuxième circuit (41) montés en parallèle, le premier filtre comportant en outre des moyens de régénération (20, 21) séquentielle par combustion des suies, le premier filtre ayant un rapport surface de filtration sur volume utile compris entre 80 et 5000 m-1 et de préférence entre 150 et 1500 m⁻¹, les moyens de captation et de traitement ayant une sortie (9) d'effluents débarrassés de suies et riches en hydrogène,
- au moins une pile à combustible connectée à la sortie des effluents des moyens de captation et de traitement, adaptée à produire de l'électricité,
- des moyens de mise en oeuvre en alternance des moyens de captation et de traitement des suies (30, 31, 32, 35) connectés aux moyens de régénération du premier filtre (20, 21).

13. Dispositif selon la revendication 12, dans lequel les moyens (30) de mise en oeuvre en alternance comprennent des moyens (33, 34) de modification des conditions de fonctionnement de la chambre d'oxydation partielle pendant des périodes de régénération du premier filtre, pour la réduction des quantités de suies produites pendant ces périodes et circulant dans le deuxième circuit.

14. Dispositif selon l'une des revendications 12 à 13, dans lequel le deuxième circuit comporte un filtre à suies.

15. Dispositif selon l'une des revendications 12 à 14, dans lequel des moyens (50, 51, 52, 53) d'épuration des effluents sont interposés entre la sortie des moyens de captation et de traitement des suies et la pile à combustible (10).
